(19) Europäisches Patentamt
European Patent Office
Office européen des brevets

(11) EP 2 276 548 B1

(12) **FASCICULE DE BREVET EUROPEEN**

(45) Date de publication et mention
de la délivrance du brevet:
**27.03.2013 Bulletin 2013/13**

(21) Numéro de dépôt: **09728317.0**

(22) Date de dépôt: **03.04.2009**

(51) Int Cl.:
***B01D 15/18*** *(2006.01)*  ***G01N 30/46*** *(2006.01)*

(86) Numéro de dépôt international:
**PCT/IB2009/005191**

(87) Numéro de publication internationale:
**WO 2009/122281 (08.10.2009 Gazette 2009/41)**

(54) **PROCÉDÉ DE SÉPARATION MULTICOLONNES À GRADIENT**

GRADIENTENELUTIONSMEHRSÄULENTRENNVERFAHREN

GRADIENT-ELUTION MULTI-COLUMN SEPARATION METHOD

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **03.04.2008 FR 0801844**

(43) Date de publication de la demande:
**26.01.2011 Bulletin 2011/04**

(73) Titulaire: **Novasep**
**54340 Pompey (FR)**

(72) Inventeurs:
• **VALERY, Eric**
**F-54425 Pulnoy (FR)**

• **OSUNA SANCHEZ, Hector**
**F-54520 Laxou (FR)**
• **BAILLY, Michel**
**F-54000 Nancy (FR)**

(74) Mandataire: **Hirsch & Associés**
**58, avenue Marceau**
**75008 Paris (FR)**

(56) Documents cités:
**EP-A- 0 495 640      WO-A-2006/116886
WO-A-2007/012750    JP-A- 2 238 358**

## Description

La présente invention concerne un procédé de séparation multicolonnes à gradient des fractions d'un mélange, par chromatographie.

La chromatographie est une méthode de séparation basée sur la différence de distribution des composés d'un mélange entre une phase mobile et une phase stationnaire, dite aussi phase adsorbante. Les composés sont séparés en percolant un solvant liquide, gazeux ou supercritique dans un dispositif (une colonne) remplie de phase adsorbante. Cette méthode est largement mise en oeuvre comme technique d'analyse afin d'identifier et de quantifier les composés d'un mélange. Elle peut également être mise en oeuvre comme technique de purification.

Selon les besoins, différents procédés chromatographiques sont employés pour réaliser la purification de molécules. Ces procédés peuvent être classés selon plusieurs critères : le procédé peut être discontinu, ou continu ; les systèmes peuvent comporter une ou plusieurs colonnes ; la composition de l'éluant peut être isocratique, ou un gradient peut être effectué.

La chromatographie d'élution ou chromatographie batch est largement employée. Ce procédé est basé sur l'injection discontinue du mélange à purifier dans une colonne remplie de la phase stationnaire adaptée qui est percolée avec un éluant assurant la migration et la séparation des produits dans la colonne. Les produits séparés sont soutirés en sortie de colonne. Les injections peuvent se répéter de manière périodique avec un temps de période permettant de conserver la séparation entre injections successives.

La chromatographie dite batch est un procédé largement répandu, notamment à petite et moyenne échelle. C'est un procédé simple à mettre en oeuvre (une seule colonne) qui s'avère généralement efficace, mais peu performant en terme de productivité. Celle-ci est généralement faible et les produits purifiés sont généralement très dilués dans le solvant d'élution.

L'idée de réaliser un contre-courant entre la phase éluante et la phase adsorbante a été explorée pour donner naissance au concept de Lit Mobile Vrai. En 1961, un procédé est apparu, le Lit Mobile Simulé ou « Simulated Moving Bed », en anglais (SMB), permettant de simuler le mouvement du solide par une connexion astucieuse entre les colonnes. Il se caractérise en ce que l'on fait avancer périodiquement, dans le sens de circulation du fluide principal, les points d'introduction de charge et d'éluant alors que l'on fait avancer simultanément et selon un même incrément les points de soutirage d'un raffinat et d'un extrait.

Le document EP-A-1 716 900 décrit l'intégration d'une méthode par gradient de force motrice dans un procédé SMB. Le document décrit un procédé pour une purification continue ou quasi-continue d'un mélange contenant plusieurs composés. Comme en SMB, plusieurs zones sont mises en oeuvre. La purification est faite au moyen d'au moins deux, de préférence au moins trois colonnes chromatographiques individuelles dans lesquelles le mélange est introduit, au moyen d'un solvant. Le mélange contenant plusieurs composés comprend au moins des impuretés légères, un produit intermédiaire à purifier et des impuretés lourdes. Les colonnes sont utilisées selon au moins une étape ou une position en mode batch. Dans ce mode la sortie d'une colonne est utilisée pour soutirer le produit intermédiaire. Les colonnes sont également utilisées dans au moins une étape ou une position en mode continu ou quasi-continu. Dans ce mode la sortie d'au moins une colonne est connectée de manière fluide à l'entrée d'au moins une autre colonne. Le mode batch et le mode continu ou quasi-continu sont réalisés de manière synchrone ou séquentielle. Après ou dans une période de commutation, les colonnes sont déplacées dans un sens contraire au sens général du débit de solvant.

Un inconvénient de ce procédé est qu'il demande un dispositif complexe pour sa mise en oeuvre et des outils de simulation pour sa compréhension.

L'invention a pour but d'obtenir un procédé performant tout en étant simple à réaliser.

Pour cela, il est proposé un procédé de séparation de fractions d'un mélange à séparer comprenant les étapes de

-   fourniture d'un dispositif comprenant au moins deux colonnes de chromatographie montées en série,
-   injection discontinue de mélange à séparer, en un point unique du dispositif,
-   soutirage discontinu de la fraction enrichie en produit d'intérêt, en un point unique du dispositif,
-   injection d'éluants dans chaque colonne et déplacement des points d'injection d'éluants, les éluants ayant une force éluante différente.

Selon une variante, le procédé de séparation de fractions d'un mélange à séparer comprend les étapes de

-   fourniture d'un dispositif comprenant trois colonnes de chromatographie montées en série,
-   injection discontinue de mélange à séparer, en un point unique du dispositif,
-   soutirage discontinu de la fraction enrichie en produit d'intérêt, en un point unique du dispositif,
-   injection d'éluants dans chaque colonne et déplacement des points d'injection d'éluants, les éluants ayant une force éluante différente.

Selon une variante, l'injection du mélange à séparer est cyclique.

Selon une variante, le soutirage de la fraction enrichie est cyclique.

Selon une variante, le déplacement des points d'injection des éluants est périodique.

Selon une variante, les éluants sont injectés de manière continue ou discontinue.

Selon une variante, au moins un éluant est injecté de manière discontinue.

Selon une variante, la composition de chaque éluant est constante.

Selon une variante, la composition d'au moins un éluant, indépendamment les uns des autres, est variable.

Selon une variante, au moins un éluant est déplacé de façon asynchrone.

Selon une variante, au moins deux colonnes séparent le point d'injection de la charge à traiter du point de soutirage du produit d'intérêt, selon le sens d'écoulement de la phase mobile.

Selon une variante, toutes les colonnes du système séparent le point d'injection de la charge à traiter du point de soutirage du produit d'intérêt, selon le sens d'écoulement de la phase mobile.

Selon une variante, le mélange à séparer est injecté à l'aide d'organes choisis dans le groupe comprenant une boucle d'injection, une pompe d'injection, un récipient sous pression.

Selon une variante, le mélange à séparer est circulé dans une colonne de chromatographie supplémentaire préalablement à l'injection dans le dispositif.

Selon une variante, la colonne de chromatographie supplémentaire est intercalée entre l'organe d'injection de mélange et le point d'injection unique du mélange dans le dispositif ou est entre deux colonnes du dispositif.

Selon une variante, le volume soutiré de fraction enrichie en produit d'intérêt est variable.

Selon une variante, le mélange à séparer est injecté à l'aide d'organes choisis dans le groupe comprenant une boucle d'injection, une pompe d'injection.

Selon une variante, le mélange à séparer est circulé dans une colonne de chromatographie supplémentaire préalablement à l'injection dans le dispositif.

Selon une variante, la colonne de chromatographie supplémentaire est intercalée entre l'organe d'injection de mélange et le point d'injection unique du mélange dans le dispositif ou est entre deux colonnes du dispositif.

Selon une variante, la composition de chaque éluant, indépendamment les uns des autres, est constante ou variable.

Selon une variante, les éluants sont injectés de manière continue ou discontinue.

Selon une variante, les éluants sont déplacés indépendamment les uns des autres.

Selon une variante, le procédé est cyclique.

Selon une variante, le dispositif possède constamment au moins une entrée et au moins une sortie.

Selon une variante, le soutirage du produit d'intérêt est effectué en sortie de la colonne précédant celle où la charge est introduite.

Selon une variante, la fraction appauvrie en produit d'intérêt est réinjectée dans le dispositif.

Il est également proposé une utilisation du procédé précédemment décrit pour la séparation de molécules de synthèse, des extraits naturels, des protéines obtenues par fermentation, des protéines obtenues par synthèse ou hémi synthèse, des immunoglobulines, des anticorps monoclonaux, des peptides obtenus par fermentation, des peptides obtenus par synthèse ou hémi synthèse.

D'autres caractéristiques et avantages de l'invention apparaîtront à la lecture de la description détaillée qui suit des modes de réalisation de l'invention, donnés à titre d'exemple uniquement et en références aux dessins qui montrent :

- figures 1 et 2, le fonctionnement du procédé de séparation ;
- figures 3 et 4, des dispositifs d'injection de mélange ;
- figures 5 à 11, des exemples de graphes d'élution de composés ;
- figures 12 à 15, un exemple de fonctionnement du procédé.

Il est proposé un procédé de séparation de fractions d'un mélange à séparer. Ce procédé est appliqué à un dispositif comprenant au moins deux colonnes de chromatographie montées en série. Le procédé comprend des étapes d'injection discontinue de mélange à séparer, en un point unique du dispositif, de soutirage discontinu de la fraction enrichie en produit d'intérêt, en un point unique du dispositif, d'injection d'éluants dans chaque colonne et de déplacement des points d'injection d'éluants. Ces éluants présentent une force éluante différente. Le procédé permet une séparation efficace et simple à réaliser.

Ce procédé est un procédé de séparation multicolonnes à gradient. Ce procédé est un procédé non batch. Il s'appliquera en particulier aux séparations d'un mélange contenant au moins deux composés. La séparation proposée par le procédé utilise un gradient de force éluante appliqué au cours de la chromatographie.

Les molécules pouvant ainsi être purifiées sont par exemple : des molécules de synthèse, des extraits naturels, des protéines obtenues par fermentation, des protéines obtenues par synthèse ou hémi synthèse, des immunoglobulines, des anticorps monoclonaux, des peptides obtenus par fermentation, des peptides obtenus par synthèse ou hémi synthèse.

Les phases stationnaires susceptibles d'être utilisées sont par exemple : des supports solides poreux (par exemple des silices, aussi appelées phases normales), des supports solides poreux greffés (par exemple des phases dites inverses), des résines échangeuses d'ion, des résines greffées (par exemple par une protéine). D'une façon plus générale toutes les phases stationnaires pour lesquelles il est pertinent d'appliquer un gradient de composition de la phase mobile, par exemple en chromatographie par exclusion de taille combinée à l'application d'un gradient de tensio-actifs.

Le gradient de composition de la phase mobile peut s'effectuer de différentes façons : passage d'une composition à une autre de façon directe, on parle alors de 'step' gradient, ou par un passage progressif d'une composition à l'autre.

Les phases mobiles utilisables sont des fluides, par exemple :

- des liquides : eau et/ou solvants organiques, avec ou sans utilisation de sels ou de solutions tampons.
- des gaz et / ou fluides supercritiques en présence ou non de solvants organiques.

Les gammes de pressions sont variables avec la granulométrie de la phase stationnaire, la viscosité du solvant et la vitesse de la phase mobile à l'intérieur des colonnes, et de façon générale, sont comprises entre 0,1 et 300 bars. Par exemple, elles seront de :

- 0,1 à 10 bar sur des granulométries allant de 400 $\mu$m à 50 $\mu$m
- 3 à 50 bar sur des granulométries allant de 90 $\mu$m à 5 $\mu$m
- 40 à 300 bar en utilisant des éluants contenant du $CO_2$ dissous dans la phase liquide, ou à l'état liquide ou supercritique.

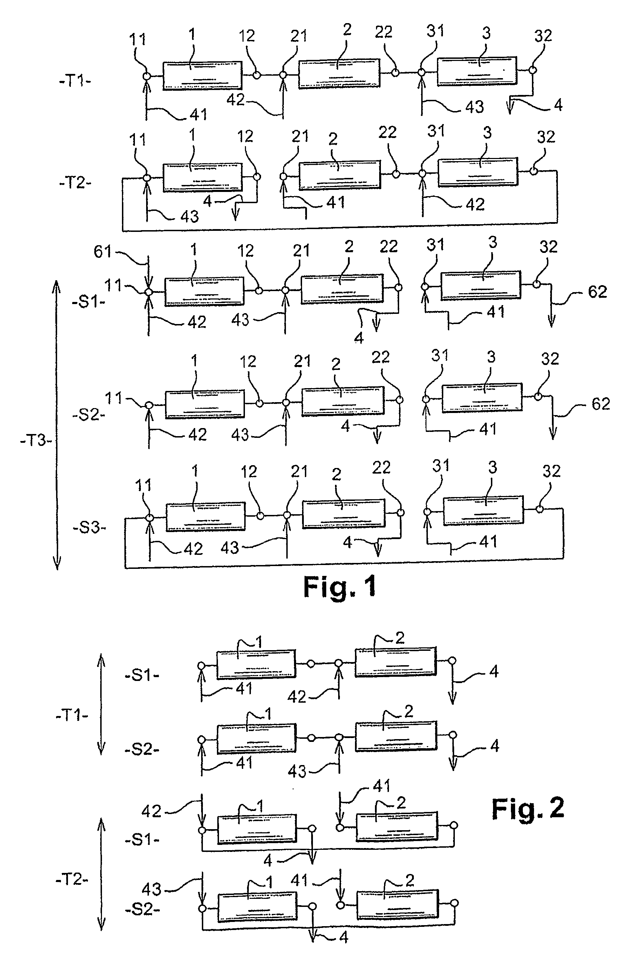

La figure 1 montre le fonctionnement du procédé de séparation. Ce procédé de séparation est appliqué à un dispositif comportant des colonnes de chromatographie. Ce procédé permet de séparer des fractions d'un mélange (ou charge) à séparer. Le mélange peut être binaire ou ternaire, c'est-à-dire comportant deux ou trois composés. Dans le cas où le mélange est ternaire, c'est-à-dire avec trois composés, le produit d'intérêt est dans la fraction de coeur (c'est-à-dire que le produit d'intérêt est encadré par des impuretés qui ont des temps de rétention plus faibles et plus élevés). Toutefois, le mélange peut contenir plus de trois composés. Selon la figure 1, le dispositif comprend trois colonnes 1, 2 et 3 montées en série, c'est-à-dire que la colonne 1 a une sortie 12 contiguë à l'entrée 21 de la colonne 2 ; cette sortie 12 peut être connectée à l'entrée 21 de la colonne 2, de sorte à faire circuler un fluide entre les deux colonnes 1 et 2. De même, la sortie 22 de la colonne 2 est contiguë à l'entrée 31 de la colonne 3. Par la suite, on appelle colonnes en série des colonnes dont la sortie d'une première colonne est susceptible d'être connectée à l'entrée d'une seconde colonne, pour faire circuler un fluide entre les deux colonnes.

Le procédé fonctionne en boucle ouverte, c'est-à-dire qu'à tout moment du procédé, le dispositif comporte au moins une entrée et au moins une sortie.

Des éluants A, B et C de forces éluantes différentes sont injectés par les points 41, 42 et 43 respectivement dans les colonnes 1, 2 et 3, aux points 11, 21 et 31. Une sortie 4 est connectée à la sortie 32 de la colonne 3. Au bout d'une période T1, les points d'injection 41, 42, 43 des éluants A, B et C sont déplacés. La période est la durée qui sépare deux déplacements d'un même éluant. Selon la figure 1, les points d'injection 41, 42, 43 sont déplacés de telle sorte que les éluants A, B et C soient respectivement injectés dans les colonnes 2, 3 et 1, aux points 21, 31 et 11. La sortie 4 qui se trouvait à la sortie 32 de la colonne 3 subit le même déplacement et est alors connectée à la sortie 12 de la colonne 1. Au bout d'une autre période T2, les points d'injection 41, 42 et 43 sont déplacés de telle sorte que les éluants A, B et C soient respectivement injectés dans les colonnes 3, 1 et 2 aux points 31, 11 et 21, et la sortie 4 connectée à la sortie 22 de la colonne 2.

On peut constater qu'un nouveau déplacement à la fin de la période T3 conduit le dispositif à être à nouveau dans son état initial, soit l'état de la période T1. Le procédé de séparation décrit fonctionne de manière cyclique, le dispositif étant dans une configuration initiale à la fin de chaque cycle.

Ce déplacement des points d'injection 41, 42 et 43, au bout d'une période T, permet de réaliser un gradient de composition de la phase mobile dans les colonnes 1, 2 et 3. En effet, lors de la période T1, c'est-à-dire lorsque les éluants A, B et C sont injectés respectivement dans les colonnes 1, 2 et 3, la colonne 1 est traversée par le seul éluant A ; la colonne 2 est traversée par un mélange des éluants A et B ; la colonne 3 est traversée par un mélange des éluants A, B et C. La fin de la période T1 et le début de la période T2 sont marqués par le déplacement des éluants A, B et C de manière à ce que les éluants soient respectivement injectés dans les colonnes 2, 3 et 1. La colonne 1 est alors traversée par un mélange des éluants A, B et C ; la colonne 2 est traversée par le seul éluant A ; la colonne 3 est traversée par un mélange des éluants A et B. De la même manière, la fin de la période T2 et le début de la période T3 sont marqués par le déplacement des points d'injection des éluants. La colonne 1 est alors traversée par le mélange d'éluants A, B ; la colonne 2 est traversée par le mélange des éluants A, B, C ; la colonne 3 est traversée par l'éluant A. A la fin de la période T3, les points d'injection des éluants sont déplacés. Selon la figure 1, les points d'injection des éluants reviennent à la position de la période T1.

Ainsi, la composition de la phase mobile au sein d'une même colonne varie au cours d'un cycle, c'est-à-dire pendant la durée au bout de laquelle un point d'injection d'éluant revient à sa position initiale. Par exemple, la colonne 3 sera traversée, au cours d'un cycle, successivement par un mélange des éluants A, B et C, puis par un mélange des éluants A et B, et enfin par le seul éluant A. La même situation se retrouve pour chaque colonne, successivement. Par ce déplacement simple des éluants, un gradient de composition de la phase mobile au sein de chaque colonne est créé. Ceci est avantageux, que ce soit en termes de production (cycles plus courts) ou de séparation (meilleure résolution entre les différents produits et reproductibilité).

La sortie 4 présentée sur la figure 1 peut être réinjectée totalement ou en partie au niveau d'un des points d'injection d'éluant 41, 42, ou 43.

Selon la figure 1, le déplacement de chaque éluant a lieu simultanément, à titre d'exemple. Dans ce cas, il y a autant de périodes que de colonnes. Selon un autre exemple, chaque éluant peut être déplacé indépendamment des autres (déplacements asynchrones), ou ne pas être déplacé. Ces déplacements asynchrones indépendants ont lieu de façon périodique.

Chacun des éluants A, B et C peut avoir une composition identique au cours d'une ou des périodes, ou d'un cycle, ou bien avoir une composition variable, et ce, indépendamment des autres éluants. Ceci est avantageux en ce qu'il est possible d'adapter les compositions des éluants en fonction de la séparation souhaitée (vitesse de la séparation, pureté du produit d'intérêt...) et aussi en fonction des caractéristiques du produit d'intérêt (sensibilité des temps de rétention à la composition de la phase mobile). Au cours du cycle il est possible que deux éluants de composition différente soient injectés simultanément dans une même colonne afin d'atteindre une composition en entrée particulière. Ceci est avantageux en ce qu'il est possible d'assurer de multiples compositions en entrée d'une colonne à partir de quelques compositions initiales disponibles (réservoirs à composition fixée).

De plus, l'injection des éluants A, B et C peut s'effectuer de manière discontinue, ou continue, c'est-à-dire que l'injection des éluants est, ou non, interrompue dans le temps. Une injection discontinue présente l'avantage d'une grande flexibilité en permettant d'utiliser l'éluant sur une durée juste suffisante. L'injection d'un éluant peut être arrêtée au moment du déplacement de son point d'injection. Une injection continue présente quant à elle l'avantage d'une simplicité de mise en oeuvre.

Le mélange à séparer est injecté en un point unique du dispositif. Selon la figure 1 il est injecté en entrée 11 de la colonne 1, au point d'injection 61 de mélange. Ce point d'injection est unique. Ceci est particulièrement avantageux en ce qu'il permet d'utiliser tous les dispositifs d'injection classiques, ainsi que des dispositifs plus complexes. En outre, cela évite que chaque colonne ait un dispositif d'injection. Ainsi, ce dispositif nécessite moins de conduits et de vannes, et est plus facile à nettoyer. De plus, ce dispositif est plus simple à contrôler qu'un dispositif ayant plusieurs points d'injection du mélange à séparer.

De fait, il est possible d'utiliser tous les modes d'injections classiques. Par exemple, on peut utiliser une boucle d'injection. Ce mode d'injection permet d'insérer dans le flux un volume connu du mélange à séparer. On peut également utiliser une pompe. Ce mode d'injection permet d'injecter le mélange de charge à traiter directement, ou en addition d'un flux existant.

L'injection du mélange à séparer est discontinue (ou en d'autres termes non continue), c'est-à-dire que l'injection du mélange est interrompue dans le temps. Cette injection présente l'avantage d'une grande flexibilité et d'une facilité de mise en oeuvre.

L'injection de mélange à séparer est cyclique, au cours de l'une des périodes ou entre deux périodes. Selon l'exemple de la figure 1, l'injection de mélange a lieu au cours de la période T3. La période T3 peut ainsi comporter une séquence S1 au cours de laquelle l'injection de mélange à séparer peut se produire. Si le mélange est injecté pendant une durée inférieure à la durée de la période T3, la séquence S1 peut avoir une durée inférieure à la période T3. Le moment au cours duquel le mélange est injecté et la colonne où est injecté le mélange est variable, la séquence d'injection pouvant en fonction des cas se dérouler au cours de l'une ou l'autre des périodes du cycle, voire même la séquence d'injection peut commencer au cours d'une période et se terminer lors de la période suivante.

Le soutirage de la fraction enrichie en produit d'intérêt est réalisé en un point unique du dispositif. Selon la figure 1, le soutirage est effectué en sortie 32 de la colonne 3. Ceci est avantageux, en ce qu'il ne nécessite l'installation que d'un seul dispositif de soutirage pour tout le dispositif au lieu d'un dispositif par colonne. Ainsi, ce dispositif nécessite moins de conduits et de vannes, et est plus facile à nettoyer. De plus, ce dispositif est plus simple à contrôler.

Le soutirage de la fraction enrichie en produit d'intérêt est effectué de façon discontinue, c'est-à-dire que le soutirage est interrompu dans le temps. Ce soutirage a l'avantage de présenter une grande flexibilité vis-à-vis de l'ajustement du volume soutiré. Ceci permet d'ajuster la concentration de la fraction, pour rester dans les limites physiques du système (solubilité dans la phase mobile, saturation de la phase stationnaire). Plus le volume soutiré est faible, plus la concentration sera forte. De plus, la mise en oeuvre de ce soutirage est plus simple qu'un soutirage continu.

Le soutirage de la fraction enrichie en produit d'intérêt est cyclique : il est effectué au cours de l'une des périodes ou peut commencer au cours d'une période et se terminer au cours de la suivante. Le soutirage peut être total ou partiel (prélèvement d'une partie du flux passant d'une colonne à la suivante). Selon l'exemple de la figure 1, le soutirage de la fraction enrichie en produit d'intérêt a lieu au cours de la période T3 au point de soutirage 62. La période T3 peut ainsi comporter une séquence S1 au cours de laquelle le soutirage de la fraction enrichie en produit d'intérêt peut se produire. Si la fraction enrichie en produit d'intérêt est soutirée pendant une durée inférieure à la durée de la période T3, la séquence S1 peut avoir une durée inférieure à la période T3. La figure 1 montre à titre d'exemple que le soutirage au point de soutirage 62 et l'injection de mélange au point d'injection 61 peuvent se produire pendant une même séquence S1 ; toutefois, l'injection et le soutirage peuvent se produire à des séquences différentes. En outre, selon l'exemple de la figure 1, le soutirage de la fraction en produit d'intérêt peut se prolonger au-delà de la séquence S1, jusque dans une séquence S2 au cours de laquelle le mélange n'est plus injecté. Egalement, la figure 1 montre à titre d'exemple que la période T3 est plus longue que les séquences S1 et S2. La période T3 peut ainsi comporter une séquence S3 au cours de laquelle ni le soutirage de la fraction enrichie en produit d'intérêt ni l'injection de mélange n'ont lieu.

De façon préférentielle, si le mélange à séparer est injecté en entrée de la première colonne, le soutirage du produit d'intérêt est effectué en sortie de la dernière colonne. Ceci est particulièrement avantageux en ce que le produit d'intérêt est soutiré après qu'il a traversé toutes les colonnes du système.

Selon la figure 1, l'injection du mélange à séparer et le soutirage du produit d'intérêt peuvent être effectués au même moment. Dans le cas particulier de la figure 1, le soutirage du produit d'intérêt au cours d'un cycle commence simultanément à une nouvelle injection du mélange à séparer. Ce cas particulier est cependant non limitatif de l'invention.

Lors de la réalisation de l'étape d'injection de la charge à traiter, il est possible d'arrêter l'injection d'un ou plusieurs éluants. De même lors du soutirage du produit d'intérêt il est possible d'arrêter l'injection d'un ou plusieurs éluants. Les périodes au cours desquelles injection et soutirage du produit d'intérêt ont lieu peuvent avoir des durées différentes.

La figure 2 montre un exemple de fonctionnement du procédé de séparation utilisant deux colonnes. Ce procédé est appliqué à un dispositif comprenant deux colonnes en série. Selon la figure 2, pendant la première période T1 du cycle deux éluants de force éluante différente sont injectés dans les colonnes 1 et 2.

La période T1 peut se diviser en 2 séquences. La première séquence S1 comporte l'injection de deux éluants A et B dans les colonnes 1 et 2 respectivement, aux points d'injection 41 et 42. La deuxième séquence S2 comporte l'injection de deux éluants A et C dans les colonnes 1 et 2 respectivement, aux points d'injection 41 et 43.

Au bout d'une période T1, le procédé passe à la période T2. La période T2 comporte aussi deux séquences S1 et S2. Les points d'injection des éluants sont déplacés de telle sorte que les deux éluants A et B soient respectivement injectés dans les colonnes 2 et 1 pendant la séquence S1 (points d'injection 41 et 42) et que les éluants A et C soient respectivement injectés dans les colonnes 2 et 1 pendant la séquence S2 (points d'injection 41 et 43). La sortie de la colonne 2 est connectée à l'entrée de la colonne 1 pendant cette deuxième période T2. Le cycle est constitué de deux périodes. Des séquences (non représentées) d'injection du mélange à séparer et de soutirage du produit d'intérêt ont lieu une seule fois au cours du cycle. Par exemple, le mélange peut être injecté en entrée de colonne 2 au cours de la séquence S1 de la période T2 et le produit d'intérêt peut être soutiré en sortie de colonne 1 au cours des séquences S1 et S2 de la période T2. Cet exemple est non limitatif sur les évènements et le nombre de séquences des périodes.

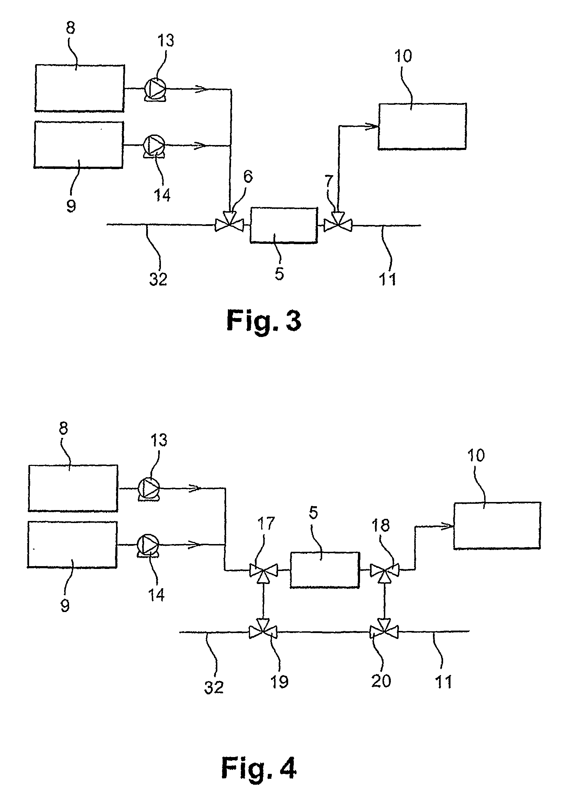

Les figures 3 et 4 montrent des dispositifs d'injection de mélange. Ces dispositifs utilisent des pompes 13 et 14 et une colonne supplémentaire 5. La colonne supplémentaire 5 est aussi appelée pré-colonne. Le mélange est circulé dans la colonne supplémentaire 5 avant d'atteindre le dispositif. Une telle colonne supplémentaire 5 a pour but de retenir certaines impuretés du mélange à séparer, en particulier les impuretés très fortement retenues sur la colonne. Ainsi, cela permet de limiter la contamination du dispositif par certaines impuretés, et facilite ainsi son nettoyage.

La figure 3 montre un dispositif d'injection de mélange dans lequel la colonne supplémentaire 5 est insérée entre la sortie d'une première colonne et l'entrée d'une seconde colonne, ces deux colonnes étant montées en série. Par exemple, sur la figure 1, la colonne supplémentaire 5 peut être insérée entre la sortie 32 de la colonne 3 et l'entrée 11 de la colonne 1. Deux vannes trois voies 6 et 7 sont placées en entrée et en sortie de la colonne supplémentaire 5, et permettent la connexion entre les colonnes en série et la colonne supplémentaire 5. La vanne en entrée 6 permet également d'injecter le mélange à séparer 8, ou bien un solvant de régénération 9, afin de nettoyer la colonne supplémentaire 5. La vanne placée en sortie 7 permet également de déconnecter la sortie de la colonne supplémentaire 5 de l'entrée de la colonne suivante afin d'évacuer par la ligne 10 le solvant de régénération 9 et les impuretés à évacuer. Ceci est particulièrement avantageux en ce que l'on ne doit régénérer que la colonne supplémentaire 5 et non l'intégralité du dispositif. Un autre avantage est que la colonne supplémentaire peut être nettoyée sans contaminer le dispositif. Une séquence de nettoyage, régénération peut avoir lieu au cours du cycle.

La figure 4 montre un dispositif d'injection de mélange dans lequel la colonne supplémentaire 5, ou pré colonne, n'est pas insérée directement entre la sortie d'une première colonne et l'entrée d'une deuxième colonne en série avec la première, mais dans un jeu de conduits et de vannes trois voies (17, 18, 19, 20) permettant différentes combinaisons : le mélange à séparer 8 peut être inséré directement en entrée d'une colonne, ou bien après circulation par la colonne supplémentaire 5. La colonne supplémentaire 5 peut être déconnectée de l'entrée d'une colonne et être régénérée sans contaminer le dispositif, ni arrêter le procédé par une étape de régénération de la colonne supplémentaire 5. Par exemple, sur la figure 1, la colonne supplémentaire 5 peut être reliée à la sortie 32 de la colonne 3 par la vanne 19 et à l'entrée 11 de la colonne 1 par la vanne 20. Egalement, on voit que la colonne supplémentaire 5 peut être court-circuitée lorsque les vannes 19 et 20 sont reliées directement entre elles.

Les dispositifs des figures 3 et 4 présentent à titre d'exemple deux modes d'utilisation d'une colonne supplémentaire 5 pour effectuer l'injection de la charge, des dispositifs utilisant un nombre différent de vannes à 2 ou plusieurs voies de pompes et solvants sont naturellement envisageables. De même le sens d'écoulement des fluides dans la colonne supplémentaire peut être inversé par rapport aux figures 3 et 4.

La charge à traiter peut également être injectée dans le système en utilisant non pas une pompe mais un récipient pressurisé.

Les autres fractions de la charge à traiter sont soutirées via un déplacement périodique d'une ligne de soutirage, ou en un point unique du système. Au choix, le soutirage des fractions est effectué sur le débit total, ou par un soutirage partiel.

Une séquence de régénération peut également être ajoutée par période pour régénérer les colonnes du système.

Le procédé selon l'invention est également applicable dans des cas d'élution non liquide, tels que les fluides contenant.du $CO_2$, décrits dans la demande WO-A-2008025887, tels que les fluides supercritiques ou subcritiques. L'ajout d'un co-solvant peut alors être effectué.

Selon une variante de l'invention, les colonnes peuvent être de volumes uniformes ou non uniformes.

Selon une variante de l'invention, les durées des périodes peuvent être uniformes ou non uniformes.

Selon une variante de l'invention, des séquences de nettoyage, de désorption de produits fortement retenus, de régénération ou d'équilibrage des colonnes peuvent être ajoutées, et peuvent être de durées identiques ou différentes selon les périodes. Selon une variante, ces étapes peuvent être réalisées en inversant le sens d'élution.

Selon une variante de l'invention, une ou plusieurs séquences de soutirage de produit non désiré peuvent être effectuées ponctuellement au sein du système. Ce soutirage permet d'éviter la concentration trop forte de certaines impuretés dont les temps de rétention sont proches des temps de rétention du produit désiré.

De manière non limitative, les exemples suivants permettent de mieux illustrer l'invention.

Exemple 1

L'exemple suivant, issu d'une simulation, illustre la mise en oeuvre du procédé comparativement à un procédé batch. Dans cet exemple, la simulation réplique exactement les séquences décrites dans les exemples en répétant plusieurs cycles.

Le modèle utilisé est de type piston diffusionnel avec résistance au transfert interne, décrite par une loi LDF (Linear Driving Force). Les paramètres sont extraits des coefficients d'une loi de Van Deemter, déterminée à une concentration de modificateur égale à celle utilisée pour la définition des paramètres de la loi d'équilibre. La loi d'équilibre d'adsorption ainsi que la composition de la charge à traiter reprennent le modèle présenté par Strohlein et al. (J. Chrom. A 1126 (1-2), 338-346, 2006), en considérant une colonne de lcm de diamètre et 30 cm de long, éluée à 1.6 mL/min, pour une teneur en modificateur de 180 g/L, les temps de rétentions des trois composés de la charge à traiter sont respectivement 127, 168 et 208.5 minutes ; pour une teneur en modificateur de 200 g/L, les temps de rétention sont 38.5, 49.5 et 60.5 minutes.

L'exemple reprend le procédé selon la figure 1.

La longueur et le diamètre des colonnes est de 10 cm et de 1 cm respectivement.

Des éluants A, B et C de force éluante différente sont injectés par les points 41, 42 et 43 respectivement dans les colonnes 1, 2 et 3, aux points 11, 21 et 31. La sortie 4 est connectée à la sortie 32 de la colonne 3.

Au bout d'une période T1, les points d'injection 41, 42, 43 des éluants A, B et C sont déplacés. Les points d'injection 41, 42, 43 sont déplacés de telle sorte que les éluants A, B et C soient respectivement injectés dans les colonnes 2, 3 et 1, aux points 21, 31 et 11. La sortie 4 est alors connectée à la sortie 12 de la colonne 1.

Au bout d'une période T2, les points d'injection 41, 42 et 43 sont déplacés de telle sorte que les éluants A, B et C soient respectivement injectés dans les colonnes 3, 1 et 2 aux points 31, 11 et 21, et la sortie 4 connectée à la sortie 22 de la colonne 2.

Les périodes T1, T2 et T3 durent 12,5 minutes. Le cycle, d'une durée de 37,5 minutes, commence à t=0. La période T1 s'étend de 0 à 12,5 min. La période T2 s'étend de 12,5 à 25 minutes. La période T3 s'étend de 25 à 37,5 min.

La période T3 peut être divisée en trois séquences, comme représentées sur la figure 1. La première séquence S1 s'étend de 25 à 26,5 minutes. Au cours de cette période, 3.45 mL de mélange à séparer est injecté en entrée 11 de la colonne 1. Un soutirage a lieu en sortie 32 de la colonne 3.

La deuxième séquence S2 s'étend de 26,5 à 27,1 minutes. Il n'y a plus d'injection du mélange à séparer. Le soutirage en sortie 32 de la colonne 3 est toujours effectif.

La troisième séquence S3 s'étend de 27,1 à 37,5 minutes. Il n'y a plus d'injection du mélange à séparer ni de soutirage.

Dans ce cas particulier, il s'avère que l'injection et le soutirage débute en même temps à t = 25 min l'injection se terminant plus tôt que le soutirage : à t = 26,5 min, ce qui peut arriver mais n'est pas un cas général.

Dans cet exemple, la composition de l'éluant A en modificateur varie de façon linéaire entre 205 et 215 g/L entre le début et la fin d'une période, de sorte à faire varier la force éluante de l'éluant A. En revanche, la teneur en modificateur des éluants B et C reste constante et égale à 180,7 et 172,8 g/L respectivement. Les débits en éluants A, B et C sont 1,6, 0,8 et 1,4 ml/min respectivement.

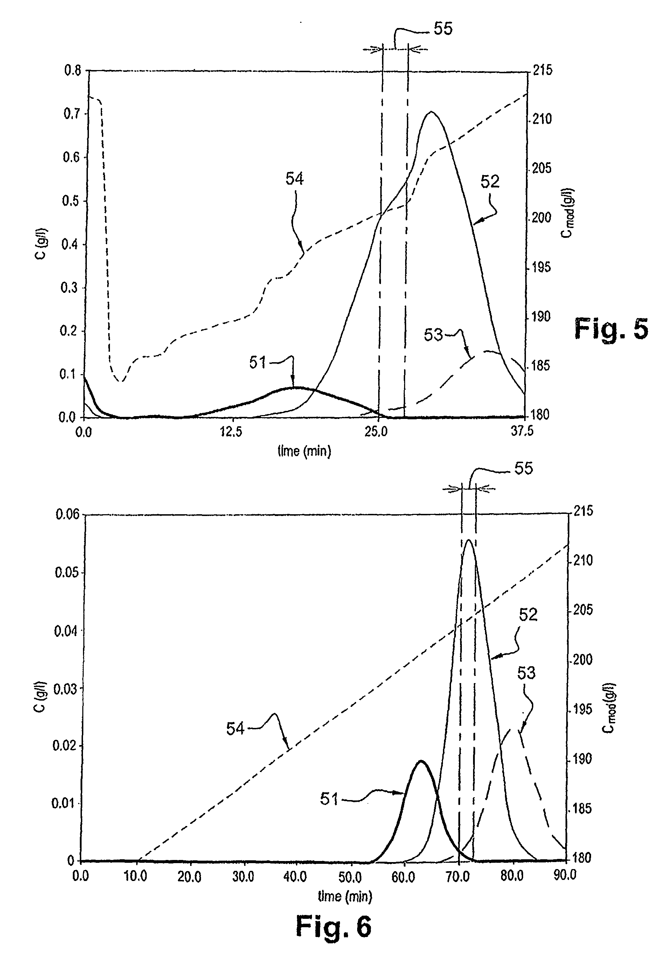

La figure 5 montre le chromatogramme obtenu en sortie de la colonne 3. Sur la figure 5, le composé II est le composé d'intérêt que l'on souhaite purifier. La courbe 51 correspond à la concentration en composé I en fonction du temps. La courbe 52 correspond à la concentration en composé II en fonction du temps. La courbe 53 correspond à la concentration en composé III en fonction du temps. La courbe 54 correspond à la concentration en modificateur en fonction du temps. L'intervalle 55 entre les lignes en traits mixtes délimite l'intervalle de temps correspondant au soutirage. La pureté est de 96%, avec un rendement de 89%.. La figure 6 montre le chromatogramme correspondant à une injection selon un procédé batch d'un volume d'injection de 3,45 ml d'un mélange de composés I, II, III (0,15, 0,55 et 0,25 g/l comme concentrations respectives) qui est élué (débit Q = 1,6 ml/min) avec un gradient (concentration en modificateur $C_{mod}$ = 180 - 215 g/l). La longueur et le diamètre de la colonne est de 30 cm et de 1 cm respectivement. Le composé II est le composé d'intérêt que l'on souhaite purifier. La courbe 51 correspond à la concentration en composé I en fonction du temps. La courbe 52 correspond à la concentration en composé II en fonction du temps. La courbe 53 correspond à la concentration en composé III en fonction du temps. La courbe 54 correspond à la concentration en modificateur en fonction du temps. Les lignes trait-point 55 montrent la fraction soutirée avec une pureté de 94% et un rendement de 20%. Ainsi, pour un même volume de charge traité par cycle, à même quantité de phase stationnaire utilisée, le procédé selon l'invention permet d'améliorer pureté et rendement.

Exemple 2

Cet exemple reprend les conditions de l'exemple 1 appliqué sur deux colonnes selon la figure 2. La longueur et le diamètre des colonnes sont de 10 cm et de 1 cm respectivement.

Au cours de la première période la sortie de la colonne 1 est connectée à l'entrée de la colonne 2. Au cours de la première période, pendant la séquence S 1 les éluants A et B sont injectés dans les colonnes 1 et 2 respectivement. Au cours de la première période, pendant la séquence S2, les éluants A et C sont injectés dans les colonnes 1 et 2 respectivement.

Au cours de la seconde période la sortie de la colonne 2 est connectée à l'entrée de la colonne 1. Au cours de la seconde période, pendant la séquence S 1 les éluants A et B sont injectés dans les colonnes 2 et 1 respectivement. Au cours de la seconde période, pendant la séquence S2, les éluants A et C sont injectés dans les colonnes 2 et 1 respectivement.

La séquence S1 dure 7,5 minutes, la séquence S2 dure 17 minutes. La durée d'une période est de 24.5 minutes, la durée totale du cycle de 49 minutes.

Au cours d'une période, la composition de l'éluant A est égale à 190 g/L de modificateur de 0 à 7,5 minutes puis varie de façon linéaire jusqu'à atteindre 200 g/L en fin de période.

La composition des éluants B et C est constante et égale à 215 g/L et 127 g/L.

Les débits des éluants A, B et C sont 2, 1,33 et 0,25 ml/min respectivement.

L'injection du mélange à séparer est réalisée dans la colonne 1 entre 38,5 et 39,5 min, avec un débit de 2 ml/min.

La collecte du produit d'intérêt est réalisée en sortie de la colonne 2 entre 38,5 et 40,5 min. La pureté obtenue en produit d'intérêt est de 93% avec un rendement de 76%.

Exemple 3

L'exemple suivant illustre la mise en oeuvre du procédé pour deux mélanges complexes M1 et M2 contenant de la leu-enképhaline obtenus par une synthèse de peptides sur phase solide selon une stratégie Fmoc. Pour chacune de ces charges, un modèle similaire a été développé selon la méthode présentée ci dessous.

Pour déterminer un modèle, il faut calculer les temps de rétention des pics, puis leur dispersion.

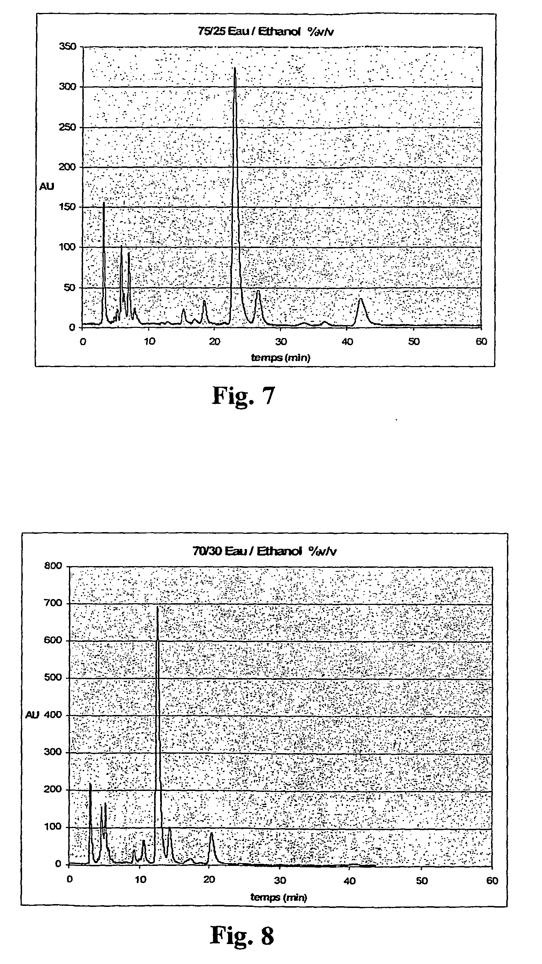

Les temps de rétention des pics sont reproduits à partir d'une loi d'équilibre d'adsorption, cette dernière est la même que celle utilisée dans les exemples précédents. Les paramètres de la loi d'équilibre a été calculée à partir de données expérimentales. Les figures 7, 8 et 9 montrent les chromatogrammes (UV, $\lambda$ = 220 nm) obtenus avec le mélange M1 en prenant comme tampon d'élution des mélanges eau/éthanol à différentes compositions (respectivement 75/25, 70/30 et 65/35) sur une colonne de longueur 15 cm et de diamètre 0.46 cm (phase stationnaire Kromasil C18-5$\mu$m). Le débit d'élution est de 0.5 ml/min. Les temps de rétention de la leu-enképhaline qui ont été obtenus sont, respectivement, 23,0 min, 12,4 min et 7,8 min. Les temps de rétention obtenus ont permis de déduire les paramètres des lois d'équilibre.

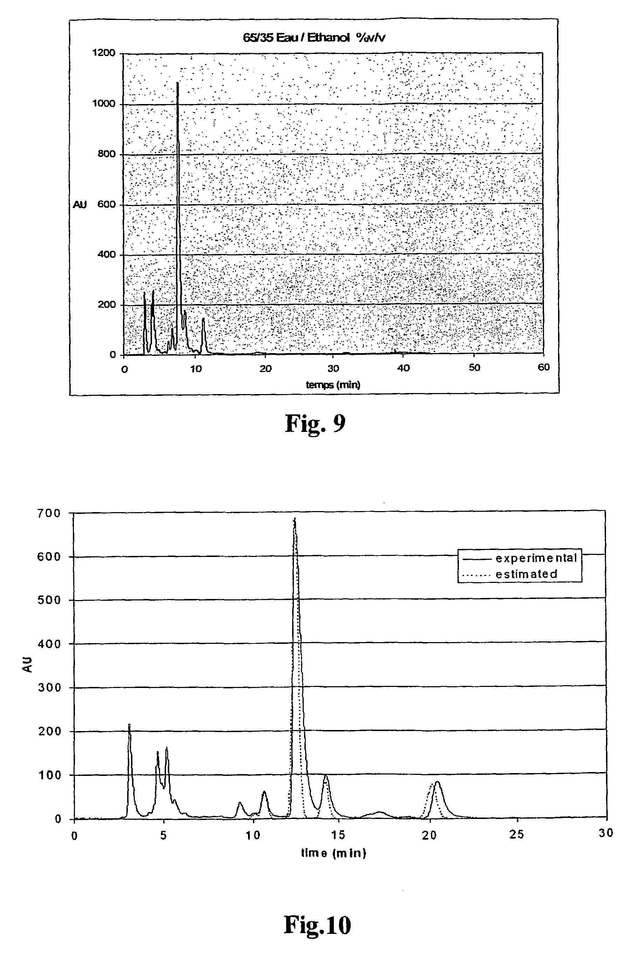

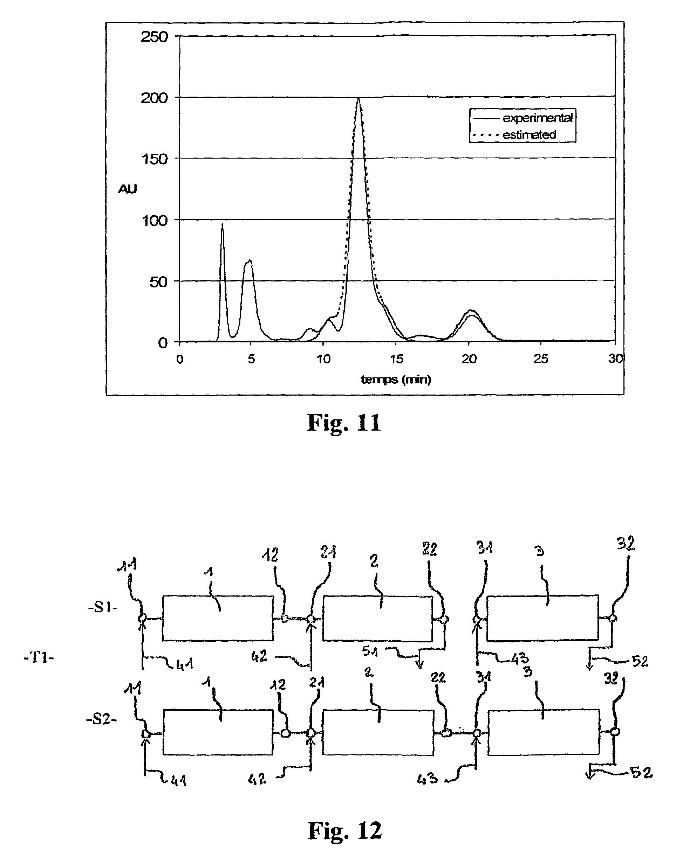

Les paramètres permettant de calculer la dispersion des pics ont été déduits des dispersions mesurées sur les chromatogrammes des figures 10 et 11, avec des diamètres de particule de 5 et 25 $\mu$m respectivement. La loi de dispersion employée est une loi de Van Deemter simplifiée:

$$HETP = A.d_p + Bu$$

avec

HETP : hauteur de plateau théorique (cm) u : vitesse linéaire du fluide (cm/s)

$d_p$ : diamètre de particule (cm)

A,B : coefficients (A=7.8, B= 0.588 s , B étant fonction du diamètre de particule au carré, cette valeur étant donnée pour $d_p$ = 20 $\mu$m)

La teneur en leu-enképhaline des mélanges M1 et M2 est de 51 et 92 % (surface sous chromatogramme UV, $\lambda$ = 220 nm) respectivement. Ce modèle a permis de reproduire de façon représentative les comportements du pic de leu-enképhaline ainsi que des impuretés les plus proches. Les figures 10 et 11 présentent le chromatogramme obtenu par l'utilisation de ce modèle (ligne en pointillés), ainsi que le chromatogramme obtenu expérimentalement (ligne pleine). Ce modèle est donc utilisable pour effectuer des calculs de procédés représentatifs.

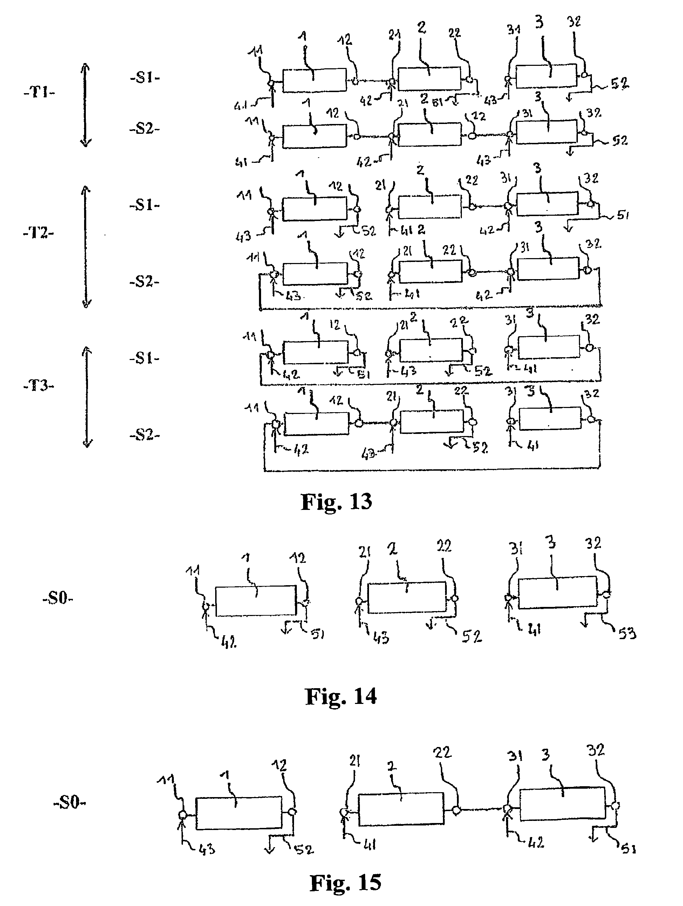

Le réglage à appliquer au mélange M1 selon le procédé présenté figure 13 est décrit ci-dessous.

Un cycle complet (9.15 min) est composé de trois périodes T1, T2 et T3. Une période est définie par deux séquences S1 et S2 de durées respectives 0.775 et 2.275 min. La figure 12 schématise les lignes d'entrée et de sortie lors de la première période T1. La durée des périodes T1, T2 et T3 est de 3.05 min. Les périodes T2 et T3 sont déduites de la première période T1 par commutation des positions des lignes d'entrée et de sortie d'une et de deux colonnes respectivement (cf. figure 13).

La période T1 comporte 2 séquences S1 et S2. La première séquence S1 comporte l'injection de trois éluants A, B et D par les points d'injection 41, 42 et 43 dans les colonnes 1, 2 et 3 respectivement, aux points 11, 21 et 31. Des sorties 51 et 52 sont connectées aux sorties 22 et 32 des colonnes 2 et 3, respectivement. Les seconde séquence S2 comporte l'injection de trois éluants A, B et C par les points d'injection 41, 42 et 43 dans les colonnes 1, 2 et 3 respectivement, aux points 11, 21 et 31. Une sortie 52 est connectée à la sortie 32 de la colonne 3. La sortie de la colonne 2 est connectée à l'entrée de la colonne 3 pendant cette deuxième séquence.

Au bout d'une période T1, les points d'injection 41, 42, 43 des éluants sont déplacés. Le procédé passe à la période T2. La période T2 comporte aussi deux séquences S 1 et S2. Les points d'injection des éluants sont déplacés de telle sorte que les éluants A, B et D soient respectivement injectés dans les colonnes 2, 3 et 1 (points d'injection 41, 42 et 43) et que les sorties 51 et 52 soient connectées aux sorties 32 et 12 des colonnes 3 et 1 pendant la séquence S 1 et que les éluants A, B et C soient respectivement injectés dans les colonnes 2, 3 et 1

(points d'injection 41, 42 et 43) et que la sortie 52 soit connectée à la sortie 12 de la colonne 1 pendant la séquence S2. La sortie de la colonne 3 est connectée à l'entrée de la colonne 1 pendant cette deuxième séquence S2.

Au bout de la période T2, les points d'injection 41, 42, 43 des éluants sont déplacés. Le procédé passe à la période T3. La période T3 comporte aussi deux séquences S1 et S2. Les points d'injection des éluants sont déplacés de telle sorte que les éluants A, B et D soient respectivement injectés dans les colonnes 3, 1 et 2 (points d'injection 41, 42 et 43) et que les sorties 51 et 52 soient connectées aux sorties 12 et 22 des colonnes 1 et 2 pendant la séquence S1 et que les éluants A, B et C soient respectivement injectés dans les colonnes 3, 1 et 2 (points d'injection 41, 42 et 43) et que la sortie 52 soit connectée à la sortie 22 de la colonne 2 pendant la séquence S2. La sortie de la colonne 1 est connectée à l'entrée de la colonne 2 pendant cette deuxième séquence S2.

Les lignes d'éluants A, B, C et D se caractérisent par les compositions et les débits suivants :

- ligne A : 5 ml/min, 33-33.5% EtOH v/v pendant S1, 33.5-35% EtOH v/v pendant S2.
- Ligne B : 0.5 ml/min, 20% EtOH v/v
- Ligne C : 0.5 ml/min, 20% EtOH v/v
- Ligne D : 6 ml/min, 50% EtOH v/v

Une séquence S0 (représentée sur la Figure 14) d'injection du mélange à séparer et de soutirage du produit d'intérêt a lieu une seule fois au cours du cycle, au début de la période T3.

En début de la troisième période T3 (à t = 6.10 min), la collecte du produit d'intérêt et l'injection du mélange à traiter ont lieu simultanément pendant 0.5 min. La collecte a lieu en sortie 32 de colonne 3 par la sortie 53 et l'injection en entrée 11 de colonne 1 par le point d'injection 42. Les puretés et rendements ainsi obtenus sont alors supérieurs à 99%.

Le réglage à appliquer au mélange M2 selon le procédé de la figure 13 est décrit ci-dessous.

Une période est définie également par deux séquences S1 et S2 (cf. figures 12 et 13) de durées respectives 0.72 et 3.5 min. La durée de la période est de 4.22 min.

Les lignes d'éluants A, B, C et D se caractérisent par les compositions et les débits suivants :

- ligne A : 3.5 ml/min, 33.1-33.6 % EtOH v/v pendant S1, 33.6-35 % EtOH v/v pendantS2.
- Ligne B : 0.28 ml/min, 20% EtOH v/v
- Ligne C : 0.3 ml/min, 20% EtOH v/v
- Ligne D : 5 ml/min, 50% EtOH v/v

Une séquence S0 (représentée sur la Figure 15) d'injection du mélange à séparer et de soutirage du produit d'intérêt a lieu une seule fois au cours du cycle, au début de la période T2.

Au cours de la deuxième période T2 (entre t = 7.6 min et t = 8.1 min), la collecte du produit d'intérêt et l'injection du mélange à traiter ont lieu simultanément pendant 0.5 min. La collecte a lieu en sortie 32 de colonne 3 par la sortie 51 et l'injection en entrée 11 de colonne 1 par le point d'injection 43. Les puretés et rendements ainsi obtenus sont alors supérieurs à 99%.

Les exemples précédents montrent que le procédé s'adapte à différents profils de charges brutes à purifier. Le profil d'impuretés du mélange M2 présente une impureté plus proche du produit d'intérêt ce qui explique des légères différences de réglages.

## Revendications

**1.** Un procédé de séparation de fractions d'un mélange à séparer comprenant les étapes de

   - fourniture d'un dispositif comprenant au moins deux colonnes de chromatographie montées en série,
   - injection discontinue de mélange à séparer, en un point unique du dispositif,
   - soutirage discontinu de la fraction enrichie en produit d'intérêt, en un point unique du dispositif,
   - injection d'éluants dans chaque colonne et déplacement des points d'injection d'éluants, les éluants ayant une force éluante différente.

**2.** Le procédé de séparation selon la revendication 1 dans lequel l'injection du mélange à séparer est cyclique.

**3.** Le procédé selon l'une des revendications 1 ou 2 dans lequel le soutirage de la fraction enrichie est cyclique.

**4.** Le procédé selon la revendication 3 dans lequel le déplacement des points d'injection des éluants est périodique.

**5.** Le procédé selon l'une des revendications 1 à 4, dans lequel les éluants sont injectés de manière continue ou discontinue.

**6.** Le procédé selon l'une des revendications 1 à 5, dans lequel au moins un éluant est injecté de manière discontinue.

**7.** Le procédé selon l'une des revendications 1 à 6, dans lequel la composition de chaque éluant est constante.

**8.** Le procédé selon l'une des revendications 1 à 7 dans lequel la composition d'au moins un éluant, indépendamment les uns des autres, est variable.

**9.** Le procédé selon l'une des revendications 1 à 8, dans lequel au moins un éluant est déplacé de façon asynchrone.

**10.** Le procédé selon l'une des revendications 1 à 9, dans lequel au moins deux colonnes séparent le point d'injection de la charge à traiter du point de soutirage du produit d'intérêt, selon le sens d'écoulement de la phase mobile.

**11.** Le procédé selon l'une des revendications 1 à 10, dans lequel toutes les colonnes du système séparent le point d'injection de la charge à traiter du point de soutirage du produit d'intérêt, selon le sens d'écoulement de la phase mobile.

**12.** Le procédé selon l'une des revendications 1 à 11, dans lequel le mélange à séparer est injecté à l'aide d'organes choisis dans le groupe comprenant une boucle d'injection, une pompe d'injection, un récipient sous pression.

**13.** Le procédé selon l'une des revendications 1 à 12, dans lequel le mélange à séparer est circulé dans une colonne de chromatographie supplémentaire préalablement à l'injection dans le dispositif.

**14.** Le procédé selon l'une des revendications 1 à 13, dans lequel la colonne de chromatographie supplémentaire est intercalée entre l'organe d'injection de mélange et le point d'injection unique du mélange dans le dispositif ou est entre deux colonnes du dispositif.

**15.** Utilisation d'un procédé selon l'une des revendications 1 à 14 pour la séparation de molécules de synthèse, des extraits naturels, des protéines obtenues par fermentation, des protéines obtenues par synthèse ou hémi synthèse, des immunoglobulines, des anticorps monoclonaux, des peptides obtenus par fermentation, des peptides obtenus par synthèse ou hémi synthèse.

## Claims

**1.** A method for separating fractions of a mixture to be separated comprising the steps of:

   - providing a device comprising at least two chromatography columns mounted in series;
   - discontinuously injecting a mixture to be separated, in a single point of the device;
   - discontinuously drawing off the fraction enriched in the product of interest, in a single point of the device;
   - injecting eluents in each column and displacing the points for injecting eluents, the eluents having a different eluting power.

**2.** The separation method according to claim 1 wherein the injection of the mixture to be separated is cyclic.

**3.** The method according to one of claims 1 or 2 wherein the drawing-off of the enriched fraction is cyclic.

**4.** The method according to claim 3 wherein the moving of the injection points of the eluents is periodic.

**5.** The method according to one of claims 1 to 4 wherein the eluents are injected continuously or discontinuously.

**6.** The method according to one of claims 1 to 5 wherein at least one eluent is injected discontinuously.

**7.** The method according to one of claims 1 to 6 wherein the composition of each eluent is constant.

**8.** The method according to one of claims 1 to 7 wherein the composition of at least one eluent, independently of each other, is variable.

**9.** The method according to one of claims 1 to 8 wherein at least one eluent is moved asynchronously.

**10.** The method according to any of claims 1 to 9 wherein at least two columns separate the injection point for injecting the feed to be treated from the draw-off point of the product of interest, according to the direction of flow of the mobile phase.

**11.** The method according to one of claims 1 to 10 wherein all the columns of the system separate the point for injecting the feed to be treated from the draw-off point of the product of interest, according to the direction of flow of the mobile phase.

**12.** The method according to one of claims 1 to 11 wherein the mixture to be separated is injected by means of members chosen from the group comprising an injection loop, an injection pump, a pressurized container.

**13.** The method according to one of claims 1 to 12 wherein the mixture to be separated is circulated in an additional chromatography column prior to injection into the device.

**14.** The method according to one of claims 1 to 13 wherein the additional chromatography column is inserted between the mixture-injecting member and the single injection point of the mixture into the device, or lies between two columns of the device.

**15.** The use of a method according to one of claims 1 to 14 for separating synthetic molecules, natural extracts, proteins obtained by fermentation, proteins obtained by synthesis or hemisynthesis, immunoglobulins, monoclonal antibodies, peptides obtained by fermentation, peptides obtained by synthesis or hemisynthesis.

**Patentansprüche**

**1.** Verfahren zur Trennung von Fraktionen eines zu trennenden Gemischs, wobei das Verfahren die folgenden Schritte umfasst:

- Bereitstellung einer Vorrichtung, die mindestens zwei Chromatographiesäulen umfasst, die in Reihe montiert sind,
- diskontinuierliche Injektion des zu trennenden Gemischs in eine einzige Stelle der Vorrichtung,
- diskontinuierliche Entnahme der mit einem Produkt von Interesse angereicherten Fraktion in eine einzige Stelle der Vorrichtung,
- Injektion von Elutionsmitteln in jede Säule und Versetzung der Stellen der Injektion der Elutionsmittel, wobei die Elutionsmittel unterschiedliche Elutionskräfte aufweisen.

**2.** Verfahren nach Anspruch 1, wobei die Injektion des zu trennenden Gemischs zyklisch ist.

**3.** Verfahren nach einem der Ansprüche 1 oder 2, wobei die Entnahme der angereicherten Fraktion zyklisch ist.

**4.** Verfahren nach Anspruch 3, wobei die Versetzung der Stellen der Injektion der Elutionsmittel periodisch ist.

**5.** Verfahren nach einem der Ansprüche 1 bis 4, wobei die Elutionsmittel kontinuierlich oder diskontinuierlich injiziert werden.

**6.** Verfahren nach einem der Ansprüche 1 bis 5, wobei mindestens ein Elutionsmittel diskontinuierlich injiziert wird.

**7.** Verfahren nach einem der Ansprüche 1 bis 6, wobei die Zusammensetzung jedes Elutionsmittels konstant ist.

**8.** Verfahren nach einem der Ansprüche 1 bis 7, wobei die Zusammensetzung mindestens eines Elutionsmittels unabhängig voneinander variabel ist.

**9.** Verfahren nach einem der Ansprüche 1 bis 8, wobei mindestens ein Elutionsmittel asynchron versetzt wird.

**10.** Verfahren nach einem der Ansprüche 1 bis 9, wobei mindestens zwei Säulen die Stelle der Injektion der zu behandelnden Beladung von der Stelle der Entnahme des Produkts von Interesse in Fließrichtung der mobilen Phase trennen.

**11.** Verfahren nach einem der Ansprüche 1 bis 10, wobei alle Säulen des Systems die Stelle der Injektion der zu behandelnden Beladung von der Stelle der Entnahme des Produkts von Interesse in Fließrichtung der mobilen Phase trennen.

**12.** Verfahren nach einem der Ansprüche 1 bis 11, wobei das zu trennende Gemisch mithilfe von Elementen injiziert wird, die aus der Gruppe ausgewählt ist, die eine Injektionsschleife, eine Injektionspumpe und einen Druckbehälter umfasst.

13. Verfahren nach einem der Ansprüche 1 bis 12, wobei das zu trennende Gemisch vor der Injektion in die Vorrichtung in einer zusätzlichen Chromatographiesäule zirkuliert wird.

14. Verfahren nach einem der Ansprüche 1 bis 13, wobei die zusätzliche Chromatographiesäule zwischen dem Element zur Injektion des Gemischs und der einzigen Stelle der Injektion des Gemischs in der Vorrichtung eingeschoben ist oder sich zwischen zwei Säulen der Vorrichtung befindet.

15. Verwendung eines Verfahrens nach einem der Ansprüche 1 bis 14 zur Trennung von Synthesemolekülen, natürlichen Extrakten, durch Fermentation erhaltenen Proteinen, durch Synthese oder Semisynthese erhaltenen Proteinen, Immunglobulinen, monoklonalen Antikörpern, durch Fermentation erhaltenen Peptiden und durch Synthese oder Semisynthese erhaltenen Peptiden.

**Fig. 1**

**Fig. 2**

**Fig. 3**

**Fig. 4**

Fig. 5

Fig. 6

**Fig. 7**

**Fig. 8**

**Fig. 9**

**Fig.10**

**Fig. 11**

**Fig. 12**

**Fig. 13**

**Fig. 14**

**Fig. 15**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1716900 A

- WO 2008025887 A

**Littérature non-brevet citée dans la description**

- **STROHLEIN et al.** *J. Chrom. A,* 2006, vol. 1126 (1-2), 338-346